# EUROPEAN PATENT SPECIFICATION

(11) **EP 3 490 827 B1**
(45) Date of publication and mention of the grant of the patent: **12.05.2021**
(21) Application number: 17749266.7
(22) Date of filing: 25.07.2017
(51) Int. Cl.: B60H 1/34, B60H 1/00, B60H 1/32

(54) **AIR SUPPLY SYSTEM COMPRISING A TRAILER, A REFRIGERATION UNIT AND AN AIR SUPPLY NOZZLE**
LUFTZUFÜHRSYSTEM MIT EINEM ANHÄNGER, EINER KÜHLEINHEIT UND EINER LUFTZUFÜHRDÜSE
SYSTÈME D'ALIMENTATION EN AIR COMPRENANT UNE REMORQUE, UNE UNITÉ DE RÉFRIGÉRATION ET UNE BUSE D'ALIMENTATION EN AIR

(30) Priority: 28.07.2016 US 201662367680 P
(43) Date of publication of application: 05.06.2019
(73) Proprietor: Carrier Corporation, Jupiter, FL 33478 (US)
(72) Inventor: STAUTER, Richie C., Syracuse, New York 13221 (US)
(74) Representative: Dehns
(86) International application number: PCT/US2017/043708
(87) International publication number: WO 2018/022611

(56) References cited:
- WO-A1-2009/014514
- WO-A1-2014/031338
- GB-A- 1 380 609
- US-A1- 2003 037 912
- US-A1- 2015 377 249

## Description

### BACKGROUND OF THE DISCLOSURE

The subject matter disclosed herein relates to an air supply system comprising a trailer and an inclined air supply nozzle for introducing conditioned air into cargo spaces.

Many goods need to be transported in a cargo space that is supplied with a stream of conditioned air. Typically, this conditioned air is refrigerated, but it may also or alternatively be heated. In order to achieve acceptable temperature uniformity within the cargo space, a jet of supply air is thus created that will ideally persist through the extent of the cargo space. Often, a significant amount of energy is required to create such a jet and, in many cases, the reach of the jet falls short of persisting through the extent of the cargo space. This can result in a non-uniform temperature distribution of the cargo space.

US 2003/037912 discloses a mobile temperature controlled container having an enclosed indoor section that contains a blower wheel compartment with an outlet nozzle arranged to discharge conditioned air into the container.

### BRIEF DESCRIPTION OF THE DISCLOSURE

According to one aspect, an air supply system is provided and includes a trailer including a top wall and an end wall adjacent to the top wall, a refrigeration unit configured to generate a fluid flow and an air supply nozzle coupled to an outlet of the refrigeration unit and the trailer at the end wall. The air supply nozzle is configured to direct the fluid flow from the outlet of the refrigeration unit into an interior of the trailer and toward a portion of the top wall.

In accordance with additional or alternative embodiments, the trailer comprises a substantially rectangular body.

In accordance with additional or alternative embodiments, the refrigeration unit includes a duct, a fan rotatably disposed within the duct to generate the fluid flow and a motor configured to drive rotations of the fan.

In accordance with additional or alternative embodiments, the air supply nozzle includes a floor having a first curvature, a ceiling having a second curvature and sidewalls extending between the floor and the ceiling. The floor, ceiling and sidewalls are connectable with the trailer with the ceiling recessed from the top wall by a first distance. The first and second curvatures are configured to direct the fluid flow through a pathway defined by the floor, ceiling and sidewalls and toward the portion of the top wall which is defined at a second distance from the end wall.

In accordance with additional or alternative embodiments, the floor, ceiling and sidewalls include locally flat terminal edges disposable within the interior of the trailer.

In accordance with additional or alternative embodiments, the second distance is equal to or greater than the first distance.

In accordance with additional or alternative embodiments, the air supply nozzle is configured to provide the fluid flow as a turbulent flow.

In accordance with additional or alternative embodiments, a cross-section of the pathway is substantially rectangular.

In accordance with additional or alternative embodiments, the floor and the ceiling are substantially parallel with each other and the sidewalls are substantially parallel with each other.

In accordance with additional or alternative embodiments, the first curvature has a smaller radius of curvature than the second curvature.

In accordance with additional or alternative embodiments, the floor and ceiling have respectively decreasing radii of curvature along the pathway.

The an air supply nozzle may be configured to strengthen the fluid flow jet by Coanda-effect-direction of the fluid flow jet from the refrigeration unit into the trailer at an acute angle relative to the top wall.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a side view of a truck in accordance with embodiments;
FIG. 2 is an enlarged side view of portions of a trailer, a transport refrigeration unit (TRU) and an air supply nozzle of the truck of FIG. 1;
FIG. 3 is an enlarged view of the encircled portion of FIG. 2 illustrating fluid flow regions within the trailer;
FIG. 4 is an axial view of the air supply nozzle of FIG. 2;
FIG. 5 is an enlarged side view of an outlet portion of the air supply nozzle of FIG. 2;
FIG. 6 is an enlarged side view of the outlet portion of the air supply nozzle of FIG. 2 in accordance with alternative embodiments;
FIG. 7 is a side schematic view of an air supply nozzle angle with respect to a trailer in order to provide for a fluid flow directed toward a top wall of the trailer;
FIG. 8A is an enlarged side view of the outlet portion of the air supply nozzle of FIG. 2 with a flow conditioning element in accordance with further embodiments;
FIG. 8B is an axial view of the flow conditioning element of FIG. 8A taken along line 8B-8B; and
FIG. 9 is an enlarged side view of the outlet portion of the air supply nozzle of FIG. 2 with a flaps in accordance with further embodiments.

The detailed description explains embodiments of the disclosure, together with advantages and features, by way of example with reference to the drawings.

### DETAILED DESCRIPTION OF THE DISCLOSURE

As will be described below, an air supply nozzle is provided that is capable of generating a wall jet of fluid (i.e., a jet of air with one of its longitudinal boundaries being disposed along a solid) that persists significantly longer within an enclosure than a free jet of the same fluid (i.e., a jet of air that has no solid boundaries on any of its longitudinal sides). The air supply nozzle take advantage of the Coanda effect and, in the context of a transport refrigeration unit (TRU) of a trailer of a truck or a cargo transporter (or a shipping container), generates a wall jet by directing a fluid flow on an incline toward the ceiling of the trailer instead of a free jet formed of a substantially horizontal fluid flow that is only positioned nearby the ceiling. By so inclining the wall jet, the fluid flow tends to persist much longer within the trailer and thus increases an effective air throw capability of the TRU.

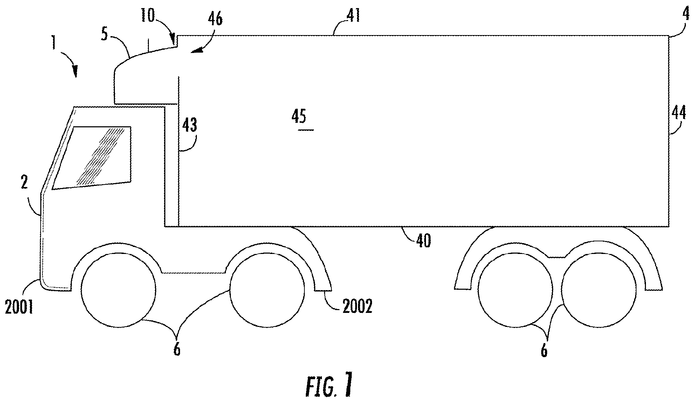

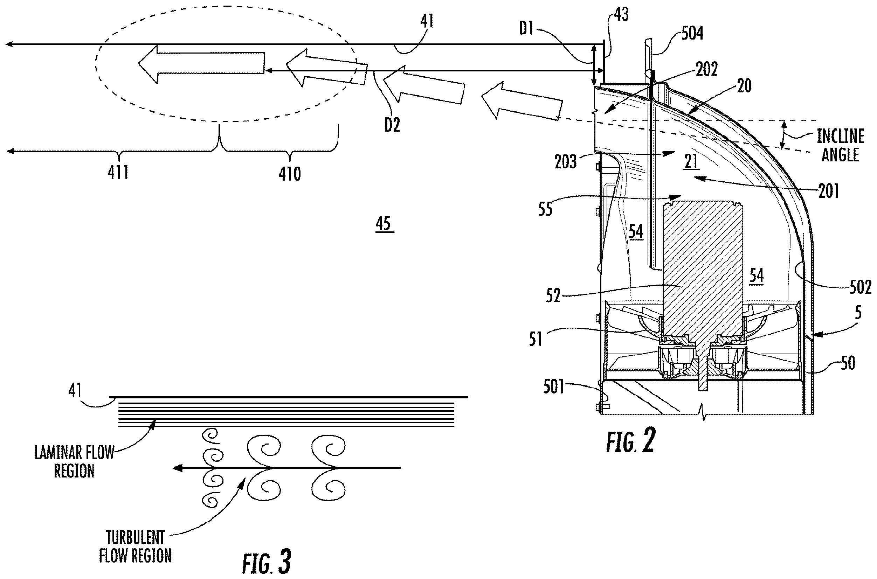

With reference to FIG. 1 and to FIGS. 2-5, an air supply system 10 is provided for use with a truck 1, cargo transportation vehicle or cargo container. As shown in FIG. 1, the truck 1 may include a rig 2 that is formed of a cab portion 2001 having an engine and a cabin in which a driver and one or more passengers can sit and a flat-bed portion 2002, a trailer 4, a TRU 5 and a plurality of axle and wheel assemblies 6 that are provided along a longitudinal axis of the rig 2 and the trailer 4. The flat-bed portion 2002 extends in the aft direction from a rear of the cab portion 2001 and has an upper surface on which a front end of the trailer 4 can securely sit. The plurality of axle and wheel assemblies 6 may be provided as components of the rig 2 and the trailer 4.

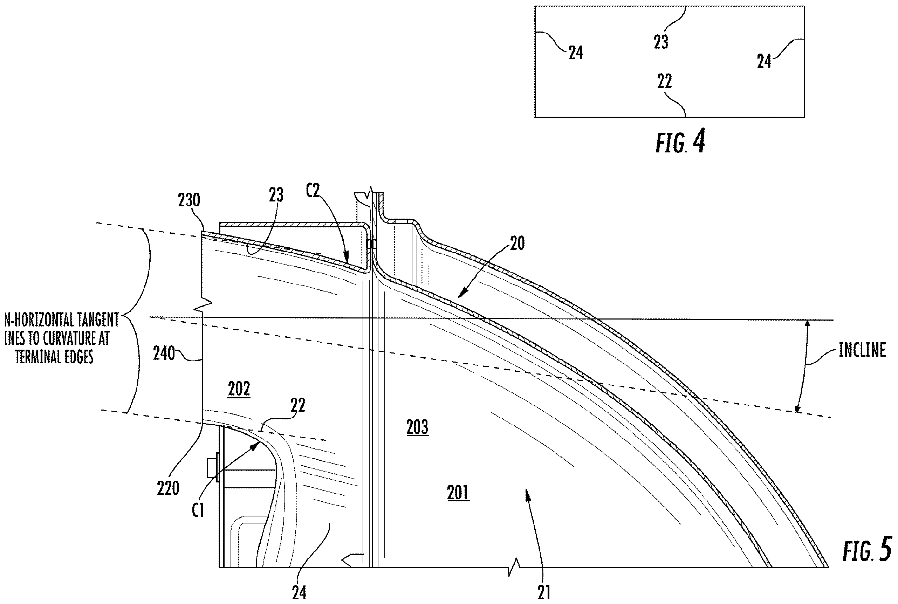

The trailer 4 is a generally elongate, rectangular body or enclosure and includes a bottom wall 40, a top wall 41 opposite the bottom wall 40, opposed sidewalls 42 (see FIG. 4) that extend substantially vertically between the bottom and top walls 40 and 41, a front end wall 43 and a rear end wall 44. The front and rear end walls 43 and 44 oppose one another and extend substantially vertically between the bottom and top walls 40 and 41 and substantially horizontally between the sidewalls 42. The trailer 4 may be substantially hollow and thus capable of storage of any type of cargo with the bottom wall 40, the top wall 41, the sidewalls 42 and the front and rear end walls 43 and 44 defining an interior 45. The rear end wall 44, for example, may include a hatch by which the interior 45 is accessible.

The TRU 5 is generally configured to generate a jet of fluid flow to either cool or heat the interior 45 of the trailer 4 and may be provided at various positions relative to the interior 45, such as on any wall of the trailer. For purposes of clarity and brevity, however, the following description will relate only to the case of the TRU 5 being provided at the front end wall 43 of the trailer 4 with access to the interior 45 by way of an opening 46 (see FIG. 1). This opening 46 is defined in the front end wall 43 at a vertical location that is proximate to but not at or adjacent to the top wall 41 such that an upper end of the opening 46 is recessed below the top wall 41 by a first distance D1 (see FIG. 2).

As shown in FIG. 2, the TRU 5 includes a duct section 50, a fan 51 that is rotatably disposed within the duct section 50 to generate the fluid flow and a motor 52. The motor 52 is configured to drive rotations of the fan 51. In accordance with embodiments, the motor 52 should be rated (i.e., sufficiently powerful) to be capable of driving rotations of the fan 51 at a minimum speed whereby the fluid flow persists throughout a substantial extent of the interior 45 from the opening 46 to the rear end wall 44.

The duct section 50 surrounds the fan 51 and the motor 52 and thus forms a duct pathway 54 along which the fluid flow generated by the rotations of the fan 51 flows. The duct section 50 may include a proximal duct section 501 that runs along a lower portion of the front end wall 43, a distal duct section 502 and lateral duct sections that extend substantially horizontally between the proximal and distal duct sections 501 and 502. The distal duct section 502 may form a portion of a front end of the TRU 5 and thus may be formed to have a flat portion and a slightly curved aerodynamic portion. In any case, the duct pathway 54 may be oriented substantially vertically with an outlet 55 defined just below the opening 46. The distal duct section 502 may include a mounting flange 504.

The air supply system 10 further includes an air supply nozzle 20 that is configured to effectively increase a persistence of the fluid flow throughout the substantial extent of the interior 45 of the trailer 4. Therefore, the use of the air supply nozzle 20 that is inclined as described herein in the air supply system 10 can permit a reduced power motor 52 to be used such that energy savings can be realized or, when used in concert with a motor 52 of a given rating, can generate a greater degree of uniform air conditioning within the interior 45.

The air supply nozzle 20 has an inlet portion 201, which is fluidly coupled to the outlet 55 of the TRU 5, an outlet portion 202, which is fluidly coupled to the opening 46 at the front end wall 43 of the trailer 4 at the first distance D1 from the top wall 41, and a central portion 203. The central portion 203 is fluidly interposed between the inlet and outlet portions 201 and 202 and thus forms a fluid pathway 21 with the inlet and outlet portions 201 and 202. The fluid flow generated by the TRU 5 can be transmitted along this fluid pathway 21 from the TRU 5 to the interior 45 of the trailer 4. In greater detail, the air supply nozzle 20 is configured to perform Coanda-effect-direction of the fluid flow from the outlet 55 into the interior 45 and at an inclined angle toward a portion 410 of the top wall 41 defined at a second distance D2 from the front end wall 43. In this way, the fluid flow is outlet from the outlet portion 202 and into the interior 45, flows toward and merges with the top wall 41 at the second distance D2 from the front end wall 43 and thus forms a wall jet that can persist along a portion of a remainder 411 of the top wall 41 or to the rear end wall 44 and, in any case, will persist longer than a horizontal jet.

In accordance with embodiments, the second distance D2 is equal to, greater than or substantially greater than the first distance D1. Thus, in the case of the second distance D2 being greater than or substantially greater than the first distance D1, an angle of the incline of the fluid flow relative to a horizontal axis and the top wall 41 may be shallow. Such a shallow angle facilitates the fluid flow becoming a wall jet at the portion 410 of the top wall 41. In accordance with further embodiments and with reference to FIG. 3, the fluid flow along the fluid pathway 21, at the opening 46 and in the interior 45 of the trailer 4 may be substantially turbulent with certain localized laminar flow regions along boundary layers defined at or near a downward facing surface of the top wall 41.

As shown in FIG. 5, the air supply nozzle 20 includes a floor 22 having a first curvature C1, a ceiling 23 having a second curvature C2 and sidewalls 24 extending between the floor 22 and the ceiling 23. From the inlet portion 201, along the central portion 203 and through the outlet portion 202, the floor 22, the ceiling 23 and the sidewalls 24 define the fluid pathway 21. At the outlet portion 202, the floor 22, the ceiling 23 and the sidewalls 24 are respectively connectable with the front end wall 43 of the trailer 4 at the opening 46 with the ceiling 23 recessed from the top wall 41 by the first distance D1. Also, the first and second curvatures C1 and C2 are configured such that the fluid flow, which is flown through the fluid pathway 21 as defined by the floor 22, the ceiling 23 and the sidewalls 24, is directed toward the portion 410 of the top wall 41.

In accordance with embodiments, the floor 22, the ceiling 23 and the sidewalls 24 may respectively include locally flat terminal edges 220, 230 and 240, which are disposable within the interior 45 of the trailer 4. Thus, at the outlet portion 202, the air supply nozzle 20 may be un-flared and recessed inwardly from a plane of the front end wall 43. In accordance with further embodiments and, as shown in FIG. 4, a cross-section of the fluid pathway 21 may be substantially rectangular with the floor 22 and the ceiling 23 being substantially parallel with each other and with the sidewalls 24 being substantially parallel with each other.

The first curvature C1 may have a smaller radius of curvature than the second curvature C2 at a given point along the fluid pathway 21. Additionally or alternatively, the floor 22 and ceiling 23 may have respectively decreasing radii of curvature along the fluid pathway 21. In any case, the respective shapes of the floor 22, the ceiling 23 and the sidewalls 24 are provided such that a plane of the opening of the outlet portion 202 is substantially parallel to the plane of the front end wall 43 and such that an axis of a predominant direction of the fluid flow exiting the outlet portion 202 is angled relative to a horizontal axis and the top wall 41.

In particular, while the terminal edges 220 and 230 of the floor 22 and the ceiling 23 of the air supply nozzle 20 may be flattened or curved, the terminal edges 220 and 230 are inclined at a non-horizontal angle (see FIG. 5) such that a mean flow angle (the "incline angle" of FIG. 5) of the fluid flow is directed towards the top wall 41.

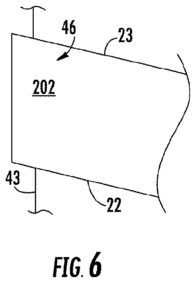

In accordance with alternative embodiments and, with reference to FIG. 6, the floor 22, the ceiling 23 and the sidewalls 24 may be formed such that at least the outlet portion 202 extends along a substantially straight longitudinal axis A1 from an exterior of the trailer 4 (i.e., outside of the front end wall 43) to the interior 45 of the trailer 4 (i.e., inside of the front end wall 43). In such cases, the curvature of the fluid pathway 21 may be localized within the central portion 203 or within the central portion 203 and only a beginning portion of the outlet portion 202.

As explained above, the air supply nozzle 20 is formed to increase an air throw capability of the TRU 5 to thereby improve a temperature uniformity of the interior 45 of the trailer 4 and/or to decrease an amount of energy expended to drive the fluid flow. For a TRU 5 with a vertical discharge evaporator fan system, the air supply nozzle 20 also decreases an amount of fan energy required because the amount of turning required to redirect the air from a vertical direction to the direction of discharge is reduced to below 90 degrees.

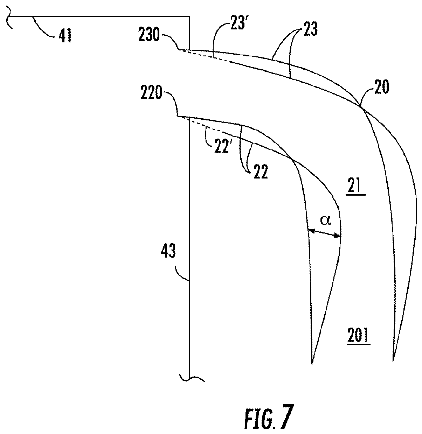

With reference to FIG. 7 and, in accordance with further embodiments, the angling of the fluid flow leaving the air supply nozzle 20 may be provided for by an angling of the TRU 5 generally (not shown) or by an angling of the floor 22 and the ceiling 23 by angle α. Such angling is illustrated not to scale in FIG. 7 but provides for an angled outflow at the terminal edges 220 and 230. The angling may also lead to an extension of the fluid pathway 21 as seen in the extension members 22' and 23' of the floor 22 and the ceiling 23, respectively. This extension may even lead to an initial direction of the fluid flow away from the trailer 4 as seen in the angled inlet portion 201. Nevertheless, despite such potential extension and forward angling, the direction of the fluid flow toward the top wall 41 still increases an overall effective length of the fluid flow down the length of the trailer 4 without requiring an increase in the power of the TRU 5 (or potentially permitted use of a decreased power TRU 5).

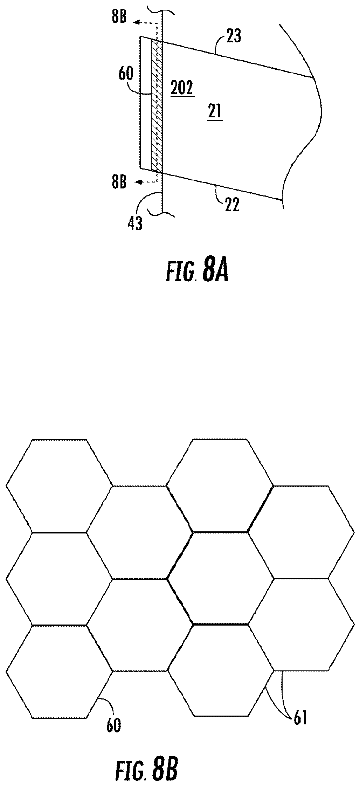

With reference to FIGS. 8A and 8B and, in accordance with further embodiments, the outlet portion 202 may include a flow conditioning element 60. The flow conditioning element 60 is interposed along the fluid pathway 21 and configured to increase a laminar characteristic of the fluid flow exiting to air supply nozzle 20. The flow conditioning element 60 may be formed of a plurality of honeycomb-shaped cells 61 or other suitable gratings. The flow conditioning element 60 may have a thickness that is similar to or less than the respective lengths of the terminal edges 220, 230 and 240.

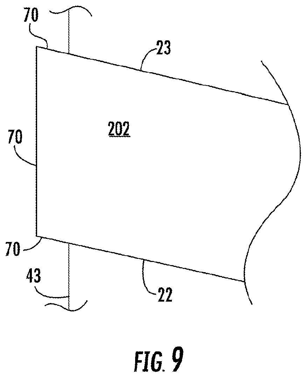

With reference to FIG. 9 and, in accordance with further embodiments, the outlet portion 202 may also include independently or dependently operable flaps 70 at the terminal edges 220 and 230. The flaps 70 may be manually or automatically controllable to alter a predominant direction of the fluid flow leaving the air supply nozzle 20 to thereby increase or decrease an angle of the fluid flow with the top wall 41. Alternatively, the flaps 70 may be manually or automatically operable to narrow or widen the effective opening of the air supply nozzle 20 to thereby increase or decrease an overall velocity of the fluid flow.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the invention defined by the claims. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. An air supply system, comprising:
a trailer (4) including a top wall (41) and an end wall (43) adjacent to the top wall;
a refrigeration unit configured to generate a fluid flow; and
an air supply nozzle (20) coupled to an outlet (55) of the refrigeration unit and the trailer at the end wall,
**characterised by** the air supply nozzle being configured to direct the fluid flow from the outlet of the refrigeration unit into an interior (45) of the trailer and toward a portion of the top wall.

2. The air supply system according to claim 1, wherein the trailer (4) comprises a substantially rectangular body.

3. The air supply system according to claim 1, wherein the refrigeration unit comprises:
a duct (50);
a fan (51) rotatably disposed within the duct to generate the fluid flow; and
a motor (52) configured to drive rotations of the fan.

4. The air supply system according to claim 1, wherein the air supply nozzle (20) comprises:
a floor (22) having a first curvature;
a ceiling (23) having a second curvature; and
sidewalls (24) extending between the floor and the ceiling,
the floor, ceiling and sidewalls being connectable with the trailer (4) with the ceiling recessed from the top wall (41) by a first distance, and
the first and second curvatures being configured to direct the fluid flow through a pathway defined by the floor, ceiling and sidewalls and toward the portion of the top wall which is defined at a second distance from the end wall (43).

5. The air supply system according to claim 4, wherein the floor (22), ceiling (23) and sidewalls (24) comprise locally flat terminal edges (220, 230, 240) disposable within the interior (45) of the trailer (4).

6. The air supply system according to claim 4, wherein the second distance is equal to or greater than the first distance.

7. The air supply system according to claim 4, wherein the air supply nozzle (20) is configured to provide the fluid flow as a turbulent flow.

8. The air supply system according to claim 4, wherein a cross-section of the pathway (21) is substantially rectangular.

9. The air supply system according to claim 4, wherein the floor (22) and the ceiling (23) are substantially parallel with each other and the sidewalls (24) are substantially parallel with each other.

10. The air supply system according to claim 4, wherein the first curvature has a smaller radius of curvature than the second curvature.

11. The air supply system according to claim 4, wherein the floor (22) and ceiling (23) have respectively decreasing radii of curvature along the pathway (21).

12. The air supply system according to claim 1,
wherein the air supply nozzle (20) is configured to strengthen the fluid flow by Coanda-effect-direction of the fluid flow from the refrigeration unit into the trailer (4) at an acute angle relative to the top wall (41).

## Patentansprüche

1. Luftversorgungssystem, umfassend:
einen Anhänger (4), der eine Oberseitenwand (41) und eine Stirnwand (43) angrenzend an die Oberseitenwand beinhaltet;
eine Kühleinheit, die dazu konfiguriert ist, einen Fluidstrom zu erzeugen; und
eine Luftversorgungsdüse (20), die mit einem Auslass (55) der Kühleinheit und dem Anhänger an der Stirnwand gekoppelt ist,
**dadurch gekennzeichnet, dass** die Luftversorgungsdüse dazu konfiguriert ist, den Fluidstrom von dem Auslass der Kühleinheit in ein Inneres (45) des Anhängers und hin zu einem Abschnitt der Oberseitenwand zu leiten.

2. Luftversorgungssystem nach Anspruch 1, wobei der Anhänger (4) einen im Wesentlichen rechteckigen Körper umfasst.

3. Luftversorgungssystem nach Anspruch 1, wobei die Kühleinheit umfasst:
eine Leitung (50);
einen Lüfter (51), der drehbar innerhalb der Leitung angeordnet ist, um den Fluidstrom zu erzeugen; und
einen Motor (52), der dazu konfiguriert ist, Umdrehungen des Lüfters anzutreiben.

4. Luftversorgungssystem nach Anspruch 1, wobei die Luftversorgungsdüse (20) umfasst:
einen Boden (22), der eine erste Krümmung aufweist;
eine Decke (23), die eine zweite Krümmung aufweist; und
Seitenwände (24), die sich zwischen dem Boden und der Decke erstrecken,
wobei der Boden, die Decke und die Seitenwände mit dem Anhänger (4) verbunden werden können, wobei die Decke von der Oberseitenwand (41) um einen ersten Abstand vertieft ist, und
die erste und zweite Krümmung dazu konfiguriert sind, den Fluidstrom durch einen Pfad, der durch den Boden, die Decke und die Seitenwände definiert ist, und zu dem Abschnitt der Oberseitenwand zu leiten, der bei einem zweiten Abstand von der Stirnwand (43) definiert ist.

5. Luftversorgungssystem nach Anspruch 4, wobei der Boden (22), die Decke (23) und die Seitenwände (24) lokal flache Anschlusskanten (220, 230, 240) umfassen, die innerhalb des Inneren (45) des Anhängers (4) angeordnet werden können.

6. Luftversorgungssystem nach Anspruch 4, wobei der zweite Abstand gleich oder größer als der erste Abstand ist.

7. Luftversorgungssystem nach Anspruch 4, wobei die Luftversorgungsdüse (20) dazu konfiguriert ist, den Fluidstrom als einen Wirbelstrom bereitzustellen.

8. Luftversorgungssystem nach Anspruch 4, wobei ein Querschnitt des Pfads (21) im Wesentlichen rechteckig ist.

9. Luftversorgungssystem nach Anspruch 4, wobei der Boden (22) und die Decke (23) im Wesentlichen parallel zueinander sind und die Seitenwände (24) im Wesentlichen parallel zueinander sind.

10. Luftversorgungssystem nach Anspruch 4, wobei die erste Krümmung einen kleineren Krümmungsradius als die zweite Krümmung aufweist.

11. Luftversorgungssystem nach Anspruch 4, wobei der Boden (22) und die Decke (23) jeweils sich verringernde Krümmungsradien entlang des Pfads (21) aufweisen.

12. Luftversorgungssystem nach Anspruch 1,
wobei die Luftversorgungsdüse (20) dazu konfiguriert ist, den Fluidfluss durch Coanda-Effekt-Richtung des Fluidstroms von der Kühleinheit in den Anhänger (4) bei einem spitzen Winkel relativ zu der Oberseitenwand (41) zu verstärken.

## Revendications

1. Système d'alimentation en air comprenant :
une remorque (4) incluant une paroi supérieure (41) et une paroi d'extrémité (43) adjacente à la paroi supérieure ;
une unité de réfrigération configurée pour générer un flux de fluide ; et
une buse d'alimentation en air (20) couplée à une sortie (55) de l'unité de réfrigération et la remorque au niveau de la paroi d'extrémité,
**caractérisé par** la buse d'alimentation en air qui est configurée pour diriger le flux de fluide depuis la sortie de l'unité de réfrigération jusque dans un intérieur (45) de la remorque et vers une portion de la paroi supérieure.

2. Système d'alimentation en air selon la revendication 1, dans lequel la remorque (4) comprend un corps sensiblement rectangulaire.

3. Système d'alimentation en air selon la revendication 1, dans lequel l'unité de réfrigération comprend :
un conduit (50) ;
un ventilateur (51) disposé de manière à pouvoir tourner dans le conduit pour générer le flux de fluide ; et
un moteur (52) configuré pour entraîner des rotations du ventilateur.

4. Système d'alimentation en air selon la revendication 1, dans lequel la buse d'alimentation en air (20) comprend :
un plancher (22) présentant une première courbure ;
un plafond (23) présentant une seconde courbure ; et
des parois latérales (24) s'étendant entre le plancher et le plafond,
le plancher, le plafond et les parois latérales pouvant être raccordés à la remorque (4) avec le plafond en retrait depuis la paroi supérieure (41) d'une première distance, et
les première et seconde courbures étant configurées pour diriger le flux de fluide à travers un trajet défini par le plancher, le plafond et les parois latérales et vers la portion de la paroi supérieure qui est définie à une seconde distance de la paroi d'extrémité (43).

5. Système d'alimentation en air selon la revendication 4, dans lequel le plancher (22), le plafond (23) et les parois latérales (24) comprennent des bords terminaux localement plats (220, 230, 240) pouvant être disposés dans l'intérieur (45) de la remorque (4).

6. Système d'alimentation en air selon la revendication 4, dans lequel la seconde distance est égale ou supérieure à la première distance.

7. Système d'alimentation en air selon la revendication 4, dans lequel la buse d'alimentation en air (20) est configurée pour fournir le flux de fluide sous la forme d'un flux turbulent.

8. Système d'alimentation en air selon la revendication 4, dans lequel une section transversale du trajet (21) est sensiblement rectangulaire.

9. Système d'alimentation en air selon la revendication 4, dans lequel le plancher (22) et le plafond (23) sont sensiblement parallèles l'un à l'autre et les parois latérales (24) sont sensiblement parallèles l'une à l'autre.

10. Système d'alimentation en air selon la revendication 4, dans lequel la première courbure présente un rayon de courbure inférieur à la seconde courbure.

11. Système d'alimentation en air selon la revendication 4, dans lequel le plancher (22) et le plafond (23) présentent des rayons de courbure respectivement décroissants le long du trajet (21).

12. Système d'alimentation en air selon la revendication 1,
dans lequel la buse d'alimentation en air (20) est configurée pour renforcer le flux de fluide par direction de l'effet Coanda du flux de fluide depuis l'unité de réfrigération jusque dans la remorque (4) à un angle aigu par rapport à la paroi supérieure (41).
